Europäisches Patentamt

(19) European Patent Office

Office européen des brevets

(11) Publication number: **0 186 819**
**B1**

(12) **EUROPEAN PATENT SPECIFICATION**

(45) Date of publication of patent specification: **15.02.89**

(51) Int. Cl.⁴: **C 03 B 37/14**

(21) Application number: **85115713.1**

(22) Date of filing: **10.12.85**

(54) **Method of fusion splicing optical fibers.**

(30) Priority: **17.12.84 JP 265899/84**

(43) Date of publication of application:
**09.07.86 Bulletin 86/28**

(45) Publication of the grant of the patent:
**15.02.89 Bulletin 89/07**

(84) Designated Contracting States:
**DE FR GB**

(56) References cited:
**GB-A-1 543 187**
**US-A-4 274 707**

**APPLIED OPTICS, vol. 23, no. 15, August 1984,
pages 2654-2659, New York, US; Y. KATO et
al.: "Arc-fusion splicing of single-mode fibers.
3: A highly efficient splicing technique"**

**PATENT ABSTRACTS OF JAPAN, vol. 8, no. 82
(P-268)1519r, 14th April 1984**
**Electronics Letters, Vol. 19, 24th November
1983, O. Kawata et Al "Low-Loss single-mode-
fibre splicing technique using core direct
monitoring" pages 1048, 1049**

(73) Proprietor: **FUJIKURA LTD.**
**No. 5-1 Kiba 1-chome**
**Koto-ku Tokyo 135 (JP)**

(72) Inventor: **Watanabe, Okosu**
**Kemigawa-Garden-Heights 2-2-2-404, Masago**
**Chiba-shi Chiba-ken (JP)**
Inventor: **Osato, Yasukuni**
**7-2-21, Fujisaki**
**Narashino-shi Chiba-ken (JP)**
Inventor: **Yamada, Takeshi**
**1507-36, Kamishizu**
**Sakura-shi Chiba-ken (JP)**
Inventor: **Suzuki, Isao**
**A-308, Matsugaoka-Ryo 188-4, Jo**
**Sakura-shi Chiba-ken (JP)**

(74) Representative: **Ruschke, Hans Edvard et al**
**Patentanwälte Dipl.-Ing. Olaf Ruschke Dipl.-Ing.**
**Hans E. Ruschke Dipl,-Ing. Jürgen Rost Dipl.-
Chem. Dr. U. Rotter Pienzenauerstrasse 2**
**D-8000 München 80 (DE)**

## Description

This invention relates to a method of fusion splicing single mode optical fibers which, particularly, comprises centering the cores of the single mode optical fibers using a microscope and carrying out fusion splicing of the cores by arc discharge.

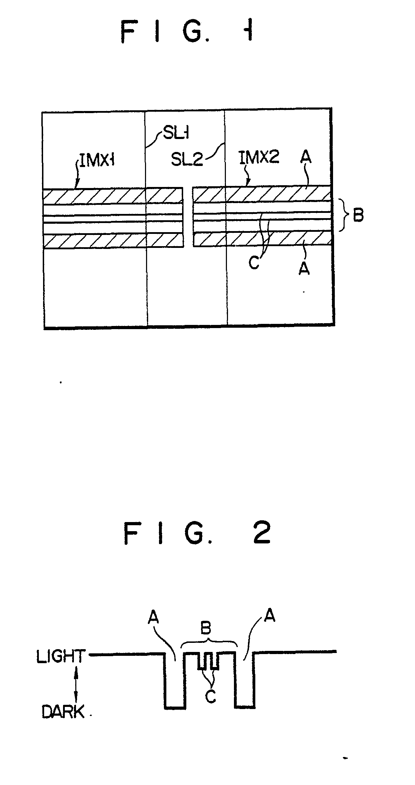

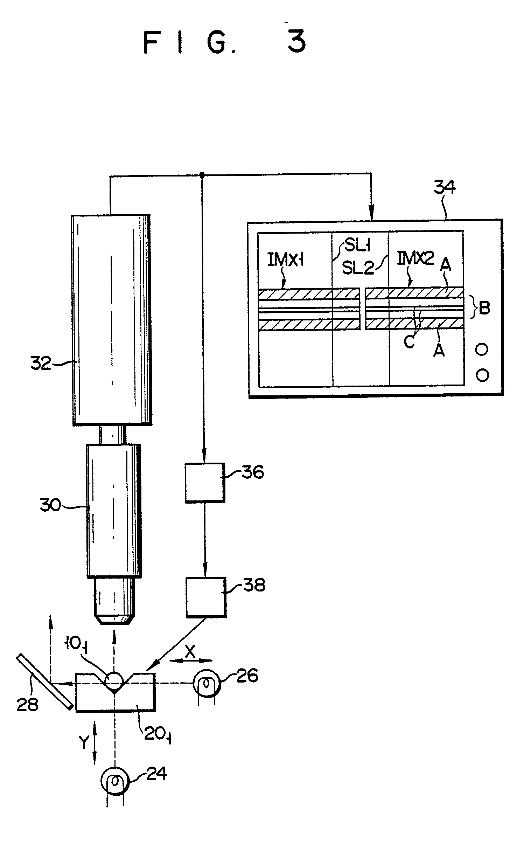

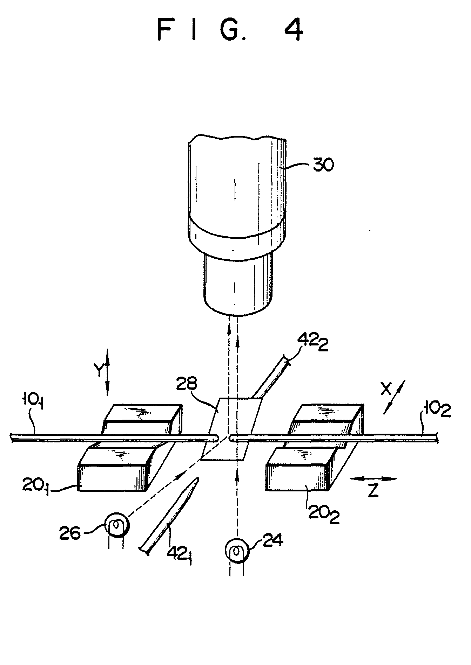

A conventional method of fusing splicing optical fibers using a microscope comprises the steps of fitting a pair of single mode optical fibers requiring fusion splicing into the V-grooves of a pair of facing support members to let the exposed portions of the fibers abut each other; providing a light source below and one to the side of the abuttal; supplying a data processor with two fiber images obtained by the light sources, namely, fiber image signal IMx1 received when the fiber is illuminated in the X-direction and fiber image signal IMx2 obtained when the fiber is illuminated in the X-direction, to determine the displacement of the paired fibers; shifting the positions of the support members holding the abutting fibers in the V-grooves to the extent corresponding to the displacement, thereby effecting the centering of the fiber cores; generating an arc by means of a pair of electrodes located on the sides of the butt joint of the fibers, thereby effecting the fusion splicing of the butt joint. In this case, as shown in Fig. 1, each image, IMx1 and IMx2, of the two fibers, obtained when the fibers are illuminated in the X-direction, comprise a dark region A extending along both sides, a bright region B interposed between parallel dark regions A and two parallel slightly dark lines C extending straight through the bright region B. The same is true for the images, though not shown, obtained when the fibers are illuminated in the Y direction. On scanning lines $SL_1$ and $SL_2$, therefore, images IMx and IMy have the levels of brightness illustrated in Fig. 2. Regions A and B are provided by lens effect of the cylindrical configuration of the fibers; and the region defined between two parallel lines C represents the core of the optical fiber. The above method is known e.g. from Electronics Letters, Vol. 19, No. 24, 24th November 1983, O. Kawata, K. Hoshino, K. Ishihara "Low-loss single-mode fibre splicing technique using core direct monitoring" pages 1048 and 1049 and the preamble of claim 1 is based thereon.

When lines C of images IMx1 and IMx2 have been aligned, the cores of the fibers are centered. However, in centering, when foreign matter such as dust exists on the exposed portions of the fibers, fiber images IMx1 and IMx2 contain noise. In such a case, the two parallel lines C of fiber images IMx1 and IMx2, which correspond to the axial edges of the fiber core, become indistinct, resulting in a failure to effect precise centering of the optical fibers. Most foreign matter is the residue of the primary fiber coating material settled on the exterior of the fibers. The conventional process used to eliminate such residue is to clean the fiber surface with a piece of gauze soaked in alcohol. However, such conventional process fails to completely clean the fiber surface. If too forcefully rubbed, the fiber surface will be damaged, probably reducing the mechanical strength of the fiber.

Another source of dust on optical fibers is extremely fine foreign matter floating in the air. With a single mode optical fiber having a diameter generally measuring several microns, fine particles floating in the air having a larger diameter than about 10 microns significantly decrease the precision with which the fiber cores should be centered. To eliminate these problems, the common practice is to apply a cleaning process featuring ultrasonic waves. However, this requires an ultrasonic cleaner, increasing the cost of manufacturing optical fibers.

This invention has been developed considering the aforementioned circumstances and is intended to provide a method of improving the centering of the cores of a pair of single mode optical fibers in preparation of fusion splicing said optical fibers.

According to the invention, there is provided a method of improving the centering of the cores of a pair of single mode optical fibers in preparation of the fusion splicing of said fibers through a pair of discharge electrodes which apply a discharge power sufficient for adhering the end faces of said fibers to each other,

said method comprising the steps of:
— aligning said pair of single mode optical fibers to that the end faces thereof face each other;
— centering the cores of said optical fibers while monitoring the cores,

characterized by further comprising a step carried out between said aligning step and said centering step, namely of applying to peripheral portions of said optical fibers adjacent to said end faces through said discharge electrodes, a discharge power lower than said former recited discharge power, to burn off dust deposited on said peripheral portions of the optical fibers so that edges of the peripheral portions of the cores may be clearly recognized when said cores are monitored and centered.

This invention can be more fully understood from the following detailed description when taken in conjunction with the accompanying drawings, in which:

Fig. 1 illustrates a pair of optical fibers to be joined by fusion splicing;

Fig. 2 indicates the various degrees of brightness appearing across the images of Fig. 1;

Fig. 3 schematically shows an apparatus for forming optical fibers by fusion splicing;

Fig. 4 indicates part of the apparatus of Fig. 3; and

Fig. 5 and 6 illustrate a pair of discharge electrodes installed on either side of an optical fiber.

Description may now be made with reference to Figs. 3 to 6 of the method of this invention for fusion splicing optical fibers. As seen from Figs. 3 and 4, the method of the invention comprises the steps of fitting a pair of single mode optical fibers

$10_1$ and $10_2$, in the V-grooves provided in the facing support members $20_1$ and $20_2$, and causing the exposed portions of the optical fibers $10_1$, $10_2$ to abut each other. Fig. 3 shows the Z direction view of the subject apparatus, thus indicating fiber $10_1$ and support member $20_1$.

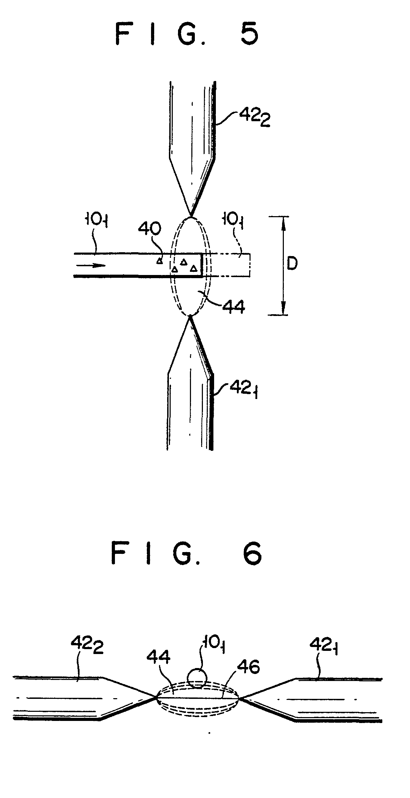

After the aforementioned fitting or aligning step, in the conventional method of fusion splicing optical fibers, centering the cores of the abutting optical fibers is performed. With the present invention, however, dust 40 (Fig. 5) deposited on the exposed portions of optical fibers $10_1$ and $10_2$ is removed prior to centering the cores. This invention is characterized in that for the removal of dust 40, the exposed portion of optical fibers $10_1$ and $10_2$ is supplied with a discharge power which is weaker than that required for the fusion splicing of optical fibers $10_1$ and $10_2$, but which is sufficiently strong for the incineration of dust 40 adhering to the optical fibers. Thus the deposited dust is cleaned by combustion. The generation of discharge power for the removal of dust is not effected by any extra unit, but by use of the arc generator used for fusion splicing. Specifically, as shown in Fig. 4, a current having a sufficient magnitude is supplied to a pair of discharge electrodes $42_1$ and $42_2$, located near the butt joint of optical fibers $10_1$ and $10_2$. Thus, arc 44 is generated which has a lower magnitude than that applied for the fusion splicing of optical fibers $10_1$ and $10_2$, but is fully sufficient to incinerate dust 40 (Fig. 5). Thus the dust 40 settled there can be taken off by combustion.

Dust on the exposed portion of optical fibers $10_1$ and $10_2$ may also be removed from each fiber separately.

When fibers $10_1$ and $10_2$ are moved axially during arc discharge, as shown by arrow in Fig. 5, dust 40 on the entire exposed portions can be removed.

At a later step, the exposed portions of optical fibers $10_1$ and $10_2$ connected by fusion splicing are covered by a heat shrinkable sheath. After covering with the sheath, when dust existed on fibers $10_1$ and $10_2$, the surface of the protective layer formed is rough. The non-uniform surface of the protective layer causes so-called micro-bending of signal light. When dust 40 on the entire surface of the exposed portions has been removed, the surface of the protecting layer formed is smooth which prevents micro-bending.

Power of about 10 W has to be supplied to generate a sufficient arc for the fusion splicing of optical fibers of the quartz series having a diameter of, for example, 125 microns. However, only about 5 W of power is necessary for the aforementioned combustion of dust. In the latter case, the arc only has to be generated for about 1 to 5 seconds.

The discharge power for the elimination of dust may be supplied to the abuttal of the optical fibers using one of the following processes.

(1) To cause combustion, the distance between electrodes $42_1$ and $42_2$ and the abuttal of adjacent optical fibers $10_1$ and $10_2$ is allowed to be larger than that defined for the fusion splicing of the adjacent optical fibers. When optical fibers of the quartz series having a diameter of 125 microns are connected by fusion splicing, an arc discharge is produced between electrodes $42_1$ and $42_2$ generally set apart at distance D, about 1.5 mm. No change in distance D is desired, because it alters the discharge-starting voltage. As seen from Fig. 6, therefore, the adjacent fibers $10_1$ and $10_2$ (though fiber $10_2$ is not shown) are positioned slightly apart from a straight line 46 extending between tne ends of paired electrodes $42_1$ and $42_2$. Even when an arc discharge is produced between the paired electrodes $42_1$, $42_2$, with the same intensity as that applied for the fusion splicing of the adjacent optical fibers, the separation of the paired electrodes $42_1$, $42_2$ from the straight line 46 ensures the generation of a smaller discharge power than that which is applied for the fusion splicing of the optical fibers.

(2) Another dust elimination method is applying a discharge current of a smaller magnitude than that used to connect optical fibers by fusion splicing. In this case, distance D between paired electrodes $42_1$ and $42_2$ and the abuttal of adjacent quartz optical fibers having a diameter of 125 microns is set at about 1.5 mm. For the fusion splicing of the optical fibers, the arc-generating current is set at a magnitude of about 20 mA. Therefore, dust removal is possible, if the discharge current is set at about 10 mA.

(3) The average value of the discharge current is reduced by causing it to be intermittently supplied. If power is intermittently supplied at short intervals, the space between paired electrodes $42_1$ and $42_2$ remains affected due to the presence of residual ions. The dust-eliminating current having a small average magnitude is reduced to a lower level than that applied for the fusion splicing of the optical fibers.

(4) A power substantially equal to the power supplied to the discharge electrodes for fusion splicing of the fibers is supplied to the discharge electrodes for a time period shorter than that for the fusion splicing of the fibers.

Power of about 10 W has to be supplied for 1 to 5 seconds to the discharge electrodes to generate a sufficient arc for the fusion splicing of optical fibers of the quartz series having a diameter of, for example 125 microns.

To cause dust combustion, a power of about 10 W is supplied to the discharge electrodes for from 50 msec. to 600 msec.

After the application of the discharge current for dust removal, the centering of the cores of optical fibers $10_1$ and $10_2$ is performed by the known previously described process. Light source 24 (Fig. 4) is provided below optical fibers $10_1$ and $10_2$, and light source 26 is set to the side of the connecting fibers. Light is emitted from both sources. The light beam sent from source 24 proceeds in the Y direction, and the light beam from source 26 projects in the X direction. Deflection mirror 28 is located opposite the abuttal of the optical fibers to light source 26. Deflection mirror 28 causes the light beam from light source 26 in the X direction to deflect in the Y direction. Microscope 30 is set above the abuttal of optical fibers $10_1$ and $10_2$. Microscope 30 receives the light beam from light source 24 through the abuttal of optical fibers $10_1$ and $10_2$ in the Y direction and the light beam from light source 26 in the X direction and later deflected in the Y direction by means of the deflection mirror 28. Television camera 32 fitted to microscope 30 picks up the abuttal of optical fibers $10_1$ and $10_2$ represented by the received light beams. These signals are transmitted to monitor screen 34 connected to television camera 32 (Fig. 3). Television camera 32 is connected to data processor 36. Image signals picked up by the television camera 32 are transmitted to data processor 36, which determines any displacement of fibers $10_1$ and $10_2$ by performing the prescribed arithmetic operation on the received signals. Drive unit 38 connected to data processor 36 receives the signal representing the displacement, if there is any, of the optical fibers, which has been determined by data processor 36. Drive unit 38 drives support members $20_1$ and $20_2$ holding adjacent fibers $10_1$ and $10_2$, respectively, to such extent as compensates for the displacement. The aforementioned process aligns optical fibers $10_1$ and $10_2$.

After termination of the alignment of the optical fibers, external power of the prescribed magnitude is supplied to paired electrodes $42_1$ and $42_2$ to effect the fusion splicing of optical fibers $10_1$ and $10_2$.

As seen from the foregoing description, the present invention is characterized in that before the alignment of the optical fibers, the fibers are supplied with a discharge power sufficient to burn off dust on the fiber surface, but lower than the power used for the fusion splicing of the optical fibers.

As described above, the present invention for the fusion splicing of optical fibers offers advantages in that it is not necessary to provide a separate unit for the removal of dust on the fiber surface; the fusion splicing of the fibers can be easily effected; the fusion splicing of the optical fibers can be carried out immediately after the aligning of the optical fibers, thereby minimizing the possibility of more dust settling on the fiber surface after the elimination of existing dust; and should any new dust be deposited, the amount is extremely minute, and unlikely to obstruct the alignment.

The foregoing embodiment refers to the case where the present invention is applied to the fusion splicing of optical fibers including alignment of the fibers with a microscope. However, with the aforementioned method using a microscope, the deposition of dust particularly on the faces of optical fibers to be subject to fusion splicing causes noise which noticeably reduces the precision with which the optical filament cores can be aligned. Therefore, the present invention can be very effective for the aforementioned fusion splicing method.

## Claims

1. A method of improving the centering of the cores of a pair of single mode optical fibers ($10_1$, $10_2$) in preparation of the fusion splicing of said fibers through a pair of discharge electrodes ($42_1$, $42_2$) which apply a discharge power sufficient for adhering the end faces of said fibers to each other,
said method comprising the steps of:
— aligning said pair of single mode optical fibers so that the end faces thereof face each other;
— centering the cores of said optical fibers while monitoring the cores,
characterized by further comprising a step carried out between said aligning step and said centering step, namely of applying to peripheral portions of said optical fibers adjacent to said end faces through said discharge electrodes, a discharge power lower than said former recited discharge power, to burn off dust (40) deposited on said peripheral portions of the optical fibers so that edges of the peripheral portions of the cores may be clearly recognized when said cores are monitored and centered.

2. Method according to claim 1, characterized in that the fibers ($10_1$, $10_2$) are moved axially during said arc discharge.

3. The method according to claim 1, characterized in that in said burning off step, said discharge electrodes ($42_1$, $42_2$) are supplied with an electric current smaller than that required for adhering said end faces of the optical fibers ($10_1$, $10_2$).

4. The method according to claim 1, characterized in that in said burning off step, said discharge electrodes ($42_1$, $42_2$) are intermittently supplied with an electric current so that the average value of the electric current is smaller than that required for adhering said end faces of the optical fibers ($10_1$, $10_2$).

5. The methods according to claim 4, characterized in that said burning off step, said discharge electrodes ($42_1$, $42_2$) are intermittently supplied with an electric current in such a manner that an arc is sustained between said discharge electrodes.

6. The method according to claim 1, characterized in that said burning off step is to set said end faces of the optical fibers ($10_1$, $10_2$) apart from a straight line extending between said discharge electrodes ($42_1$, $42_2$).

7. The method according to claim 1, characterized in that in said burning off step, said discharge electrodes ($42_1$, $42_2$) are supplied with a power substantially equal to that required for adhering said end faces of the optical fibers ($10_1$, $10_2$) to each other, but for a shorter time.

## Patentansprüche

1. Verfahren zum Verbessern der Zentrierung der Kerne eines Paares von optischen Einmoden-Fasern ($10_1$, $10_2$) bei der Vorbereitung des Schmelzspleissens derselben durch ein Paar von Entladungselektroden ($42_1$, $42_2$), die eine Entladungsleistung aufbringen, die ausreicht, die Stirnflächen der Fasern aneinanderzuheften, wobei das Verfahren die Schritte
— Ausrichten der optischen Einmoden-Fasern mit einander zugewandten Stirnflächen und
— Zentrieren der Kerne der optischen Fasern, während man die Kerne überwacht,
aufweist, gekennzeichnet weiterhin durch den zwischen dem Ausrichten und dem Zentrieren durchgeführten Schritt, auf Umfangsteile der optischen Fasern an deren Stirnflächen über die Entladungselektroden eine Entladungsleistung aufzubringen, die niedriger als die vorgenannte entladungsleistung ist, um auf den Umfangsteilen abgelagerten Staub (40) wegzubrennen, so daß beim Überwachen und Zentrieren der Kerne die Kanten der Umfangsteile der Kerne klarer erkennbar sind.

2. Verfahren nach Anspruch 1, dadurch gekennzeichnet, daß man die Fasern ($10_1$, $10_2$) während der Lichtbogenentladung axial bewegt.

3. Verfahren nach Anspruch 1, dadurch gekennzeichnet, daß man beim Wegbrennen die Entladungselektroden ($42_1$, $42_2$) mit einem elektrischen Strom speist, der niedriger ist als zum Aneinanderheften der Stirnflächen der optischen Fasern ($10_1$, $10_2$) erforderlich.

4. Verfahren nach Anspruch 1, dadurch gekennzeichnet, daß man beim Wegbrennen die Entladungselektroden ($42_1$, $42_2$) intermittierend mit einem elektrischen Strom derart speist, daß der Mittelwert des elektrischen Stroms niedriger ist als der zum Aneinanderheften der Stirnflächen der optischen Fasern ($10_1$, $10_2$) erforderliche Strom.

5. Verfahren nach Anspruch 4, dadurch gekennzeichnet, daß man beim Wegbrennen die Entladungselektroden ($42_1$, $42_2$) intermittierend mit einem elektrischen Strom derart speist, daß ein Lichtbogen zwischen ihnen erhalten bleibt.

6. Verfahren nach Anspruch 1, dadurch gekennzeichnet, daß man zum Wegbrennen die Stirnflächen der optischen Fasern ($10_1$, $10_2$) von einer zwischen den Entladungselektroden ($42_1$, $42_2$) verlaufenden Gerade versetzt anordnet.

7. Verfahren nach Anspruch 1, dadurch gekennzeichnet, daß man beim Wegbrennen die Entladungselektroden ($42_1$, $42_2$) mit einer Leistung, die im wesentlichen gleich der zum Aneinanderheften der Stirnflächen der optischen Fasern ($10_1$, $10_2$) ist, aber für eine kürzere Dauer speist.

**Revendications**

1. Procédé permettant d'améliorer le centrage des coeurs d'une paire de fibres optiques unimodales ($10_1$, $10_2$) lors de la préparation du raccordement desdites fibres par fusion à l'aide d'une paire d'électrodes de décharge ($42_1$, $42_2$) qui appliquent une puissance de décharge suffisante pour faire adhérer l'une à l'autre les faces terminales desdites fibres,
ledit procédé comprenant les opérations suivantes:
— aligner ladite paire de fibres optiques unimodales de façon que leurs faces terminales soient en regard l'une de l'autre;
— centrer les coeurs desdites fibres optiques tout en observant les coeurs à l'aide d'un instrument de contrôle,
caractérisé en ce qu'il comprend en outre une opération effectuée entre ladite opération d'alignement et ladite opération de centrage, laquelle consiste à appliquer à des parties périphériques desdites fibres optiques adjacentes auxdites faces terminales, par l'intermédiaire desdites électrodes de décharge, une puissance de décharge inférieure à ladite puissance de décharge ci-dessus indiquée, afin d'éliminer par combustion la poussière (40) déposée sur lesdites parties périphériques des fibres optiques, si bien que les bords des parties périphériques des coeurs puissent être reconnus clairement lors de leur observation et de leur centrage.

2. Procédé selon la revendication 1, caractérisé en ce que l'on déplace axialement les fibres ($10_1$, $10_2$) pendant ladite décharge d'arc.

3. Procédé selon la revendication 1, caractérisé en ce que, dans ladite opération d'élimination par combustion, on fournit auxdites électrodes de décharge ($42_1$, $42_2$) un courant électrique de plus petite intensité que celle nécessaire pour faire adhérer lesdites faces terminales des fibres optiques ($10_1$, $10_2$).

4. Procédé selon la revendication 1, caractérisé en ce que, dans ladite opération d'élimination par combustion, on fournit auxdites électrodes de décharge ($42_1$, $42_2$) un courant électrique par intermittence, si bien que la valeur moyenne de l'intensité du courant électrique est plus petite que celle nécessaire pour faire adhérer lesdites faces terminales des fibres optiques ($10_1$, $10_2$).

5. Procédé selon la revendication 4, caractérisé en ce que, dans ladite opération d'élimination par combustion, on fournit auxdites électrodes de décharge ($42_1$, $42_2$) un courant électrique par intermittence, de façon qu'un arc soit entretenu entre lesdites électrodes de décharge.

6. Procédé selon la revendication 1, caractérisé en ce que, dans ladite opération d'élimination par combustion, on place lesdites faces terminales des fibres optiques ($10_1$, $10_2$) à l'écart de la ligne droite s'étendant entre lesdites électrodes de décharge ($42_1$, $42_2$).

7. Procédé selon la revendication 1, caractérisé en ce que, dans ladite opération d'élimination par combustion, on fournit auxdites électrodes de décharge ($42_1$, $42_2$) une puissance sensiblement égale à celle nécessaire pour faire adhérer entre elles lesdites faces terminales des fibres optiques ($10_1$, $10_2$), mais pendant une durée plus courte.

# F I G. 1

# F I G. 2

1

F I G. 3

# F I G. 4

# F I G. 5

# F I G. 6